Europäisches Patentamt

European Patent Office

Office européen des brevets

(11) Publication number: **0 421 506 A1**

# (12) EUROPEAN PATENT APPLICATION

(21) Application number: 90202435.5

(22) Date of filing: 13.09.90

(51) Int. Cl.5: **B01J 8/44**, B01J 38/30

(30) Priority: 19.09.89 GB 8921190

(43) Date of publication of application:
10.04.91 Bulletin 91/15

(84) Designated Contracting States:
AT BE CH DE ES FR GB IT LI NL SE

(71) Applicant: SHELL INTERNATIONALE
RESEARCH MAATSCHAPPIJ B.V.
Carel van Bylandtlaan 30
NL-2596 HR Den Haag(NL)

(72) Inventor: Appel, Cornelis
Carel van Bylandtlaan 30
NL-2596 HR The Hague(NL)
Inventor: Everts, Rudi
Carel van Bylandtlaan 30
NL-2596 HR The Hague(NL)
Inventor: Nooijen, Johannes Lambertus
Carel van Bylandtlaan 30
NL-2596 HR The Hague(NL)
Inventor: Plug, Simon Johan
Carel van Bylandtlaan 30
NL-2596 HR The Hague(NL)
Inventor: Verheul, Cornelis Marinus
Carel van Bylandtlaan 30
NL-2596 HR The Hague(NL)

(74) Representative: Aalbers, Onno
P.O. Box 302
NL-2501 CH The Hague(NL)

(54) Apparatus for gas distribution.

(57) Apparatus comprising a vessel (1) which comprises a device for distributing a gas (6) and one or more inlet means (4) for introducing the gas upstream thereof, wherein the device is connected to the wall of the vessel and comprises one or more beds (7) of elements which beds are permeable to the gas.

## APPARATUS FOR GAS DISTRIBUTION

The present invention relates to an apparatus for gas distribution, an apparatus for regenerating coke-bearing catalyst and a process for regenerating coke-bearing catalyst.

The present invention relates to an apparatus comprising a vessel which comprises a device for distributing a gas and one or more inlet means for introducing the gas upstream thereof, wherein the device is connected to the wall of the vessel and comprises one or more beds of elements which beds are permeable to the gas.

Such an apparatus can conveniently be used to establish a homogeneous gas flow. The apparatus according to the present invention can therefore be used in any process requiring a homogeneous gas flow. Suitable processes comprise coal gasification, combustion processes, and catalyst regeneration. The present apparatus can also conveniently be used in an air-slide. The present apparatus can advantageously be applied in processes wherein solid particles are contacted with a gas stream. The present apparatus can very suitably be used in fluidization processes, wherein solid particles, for instance catalyst particles, are contacted with an upflowing gas stream. In such processes the present apparatus will suitably be applied in such a way that the fluidized particles are kept downflow with respect to the device for distributing the gas. In that way contact of solid particles with the gas inlet means is avoided. Hence, erosion problems which occur due to such contact when using conventional gas inlet means, e.g. distribution pipes with nozzles, can advantageously be avoided. As a result thereof maintenance on the gas inlet(s) can considerably decreased. Moreover, as an improved gas distribution can be established, i.e. across the total area of the vessel, an improved contact of gas and solid particles can be obtained.

The device for distributing the gas has preferably a circumference substantially extending along the wall of the vessel.

The elements are preferably situated between trays which are not permeable to the elements. In this way the elements are kept in the beds also when a considerable gas flow is applied, in particular when the beds are also provided with upper trays.

The trays in the apparatus according to the present invention can be of the usual type, for example a sieve tray made of perforated plate and having a circumference which is attached thereby to the wall of the vessel. Suitably the trays comprise screens which are for example built up of groups of rods.

In principle the elements in the beds can be of any shape. The elements are suitably of such a shape that across the bed a homogeneous flow resistance can be obtained. The elements are preferably substantially of the same size. Preferably, the elements are balls having a diameter in the range of 0.5 - 10 mm, more preferably 1 - 4 mm. The diameter of the balls is normally 2-50 times the diameter of the solid particles which are mixed with the upflowing gas.

Suitably, the elements are made of inert material, for instance ceramic material, inert steel or carrier material for catalyst particles. Preferably, the elements are made of ceramic material. The elements are suitably of such a size or arranged in such a way that the solid particles which are contacted with the gas do not pass through a bed of elements. In this way contact of solid particles and the gas inlet means is avoided. The elements may be (un)movable with respect to each other. It will be understood that if the elements are movable with respect to each other, the bed will not be filled with balls over its total height. The bed is preferably filled with elements over at least 99% of its height.

The apparatus according to the present invention can suitably be applied as regenerator chamber in a catalytic cracking unit.

Therefore the present invention further relates to an apparatus as descriped hereinabove for regenerating coke-bearing catalyst particles comprising a substantially vertically vessel which comprises one or more inlet means for introducing coke-bearing catalyst, one or more inlet means for introducing an oxygen-containing gas in the lower part of the vessel, one or more outlet means for withdrawing regenerated catalyst particles and one or more outlet means for withdrawing combustion gas in the upper part of the vessel, wherein the device for distributing the oxygen-containing gas is substantially horizontally disposed in the vessel between the inlet means for introducing coke-bearing catalyst and the inlet means for introducing the oxygen-containing gas.

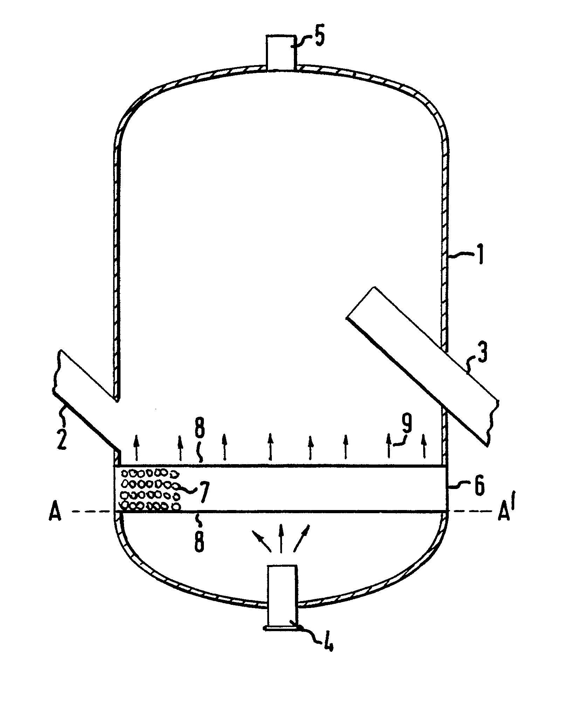

A preferred embodiment of the apparatus according to the present invention, a regeneration chamber, is illustrated hereinafter by way of Figure 1.

In Figure 1 a longitudinal cross-section of the regeneration chamber is schematically shown.

The apparatus shown in Figure 1 comprises a substantially vertically vessel (1) provided with an inlet means (2) for introducing coke-bearing catalyst, outlet means (3) for withdrawing regenerated catalyst, inlet means (4) for introducing an oxygen-containing gas, outlet means (5) for withdrawing combustion gas and a device (6) for distributing the oxygen-containing gas. The device (6) comprises a bed (7) of balls (only partly and magnified shown) of substantially the same size which is situated between trays (8).

During normal operation of the apparatus as depicted in Figure 1 hot, from a riser reactor originating, coke-bearing catalyst particles are introduced into the vessel (1) through inlet means (2). Oxygen-containing gas is introduced into the vessel via inlet means (4) and the upflowing stream of gas is subsequently homogeneously distributed by means of device (6) as indicated by arrows (9). Entering catalyst particles are consequently fluidized by means of the homogeneous upflow of gas and an optimum mixing of catalyst particles and oxygen-containing gas is established. During the fluidization coke is burnt off the catalyst at a temperature of 500-800°C and a pressure of 1-5 bar, and the combustion gases obtained are removed by means of outlet means (5). The regenerated catalyst obtained is removed from the vessel via outlet means (3). The outlet means (3) may also be arranged in such a way that device (6) is protruded, without substantially effecting a change in operation. The distance between the rods is normally smaller than the average diameter of the balls so that the balls are kept in the bed.

The present invention also relates to a process for regenerating catalyst particles wherein use is made of the regeneration chamber as described hereinabove comprising introducing an oxygen-containing gas into the bottom of the vessel by means of one or more inlet means in such a way that the catalyst which is introduced by means of one or more inlet means is fluidized thereby, coke deposited on the catalyst is burnt off, and a pressure drop is effectuated thereby across the device for distributing the oxygen-containing gas, and whereby regenerated catalyst particles are withdrawn from the upper part of the vessel.

The temperature applied in the regenerating process can be in the range of 500-800°C, whilst the pressure applied can be in the range of 1-5 bar.

## Claims

1. Apparatus comprising a vessel which comprises a device for distributing a gas and one or more inlet means for introducing the gas upstream thereof, wherein the device is connected to the wall of the vessel and comprises one or more beds of elements which beds are permeable to the gas.

2. Apparatus according to claim 1, wherein the device for distributing gas has a circumference substantially extending along the wall of the vessel.

3. Apparatus according to claim 1 or 2, wherein the elements are situated between trays which are not permeable to the elements.

4. Apparatus according to any one of claims 1-3, wherein the elements are substantially of the same size.

5. Apparatus according to any one of claims 1-4, wherein the elements are made of inert material.

6. Apparatus according to claim 5, wherein the elements are made of ceramic material.

7. Apparatus according to any one of claims 1-6, wherein the elements are balls.

8. Apparatus according to claim 7, wherein the balls have a diameter in the range of 0.5 - 10 mm.

9. Apparatus according to any one of claims 1-8 for regenerating coke-bearing catalyst particles comprising a substantially vertically vessel which comprises one or more inlet means for introducing contaminated catalyst particles, one or more inlet means for introducing an oxygen-containing gas in the lower part of the vessel, one or more outlet means for withdrawing regenerated catalyst particles and one or more outlet means for withdrawing combustion gas in the upper part of the vessel, wherein the device for distributing the gas is substantially horizontally disposed in the vessel between the inlet means for introducing the coke-bearing catalyst and the inlet means for introducing the oxygen-containing gas.

10. Process for regenerating catalyst particles comprising introducing an oxygen-containing gas into the bottom of the apparatus as claimed in claim 9 by means of one or more inlet means in such a way that the catalyst which is introduced by means of one or more inlet means is fluidized thereby, coke deposited on the catalyst is burnt off, and a pressure drop is effectuated thereby across the device for distributing the oxygen-containing gas, and whereby regenerated catalyst and combustion gas are withdrawn from the upper part of the apparatus by means of outlet means.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | Disclosed GB PATENT APPLICATION 5597/1946 (E.I. DU PONT DE NEMOURS) * Page 2, lines 1-4; page 3, line 24 - page 5, line 28; page 6, lines 9-12; page 6, lines 19-30; page 7, lines 20-21; claims 1-3,6,13,15; figure * & Laid open AU Patent Application 15236/1947 (27-11-1947) − − − | 1,2,4-8 | B 01 J 8/44 B 01 J 38/30 |
| Y | GB-A-2 081 597 (CHEVRON RESEARCH CO.) * Figure; page 3, lines 18-33; page 3, lines 88-110 * − − − | 9,10 | |
| X | US-A-2 654 659 (A.H. FRIEDMAN) * Column 1, line 44 - column 2, line 50; claim 1; figure * − − − | 1,3,5-8 | |
| Y | | 9,10 | |
| A | FR-A-2 226 207 (AGENCE NATIONALE DE VALORISA-TION DE LA RECHERCHE) * Page 1, lines 1-5; page 4, lines 8-16; page 5, line 29 - page 6, line 22; page 6, line 34 - page 7, line 26; claims 6,7; figures 2,3 * − − − − − | 1-3,7,8 | |
| | | | **TECHNICAL FIELDS SEARCHED (Int. Cl.5)** B 01 J C 10 G F 23 C |

The present search report has been drawn up for all claims

| Place of search | Date of completion of search | Examiner |
|---|---|---|
| The Hague | 23 January 91 | STEVNSBORG N. |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention

E : earlier patent document, but published on, or after the filing date
D : document cited in the application
L : document cited for other reasons

&: member of the same patent family, corresponding document